# EUROPEAN PATENT SPECIFICATION

(11) **EP 1 252 057 B1**
(45) Date of publication and mention of the grant of the patent: **20.10.2004**
(21) Application number: 00991363.3
(22) Date of filing: 27.12.2000
(51) Int. Cl.: B62J 6/00

(54) **SUPPORTING MEMBER FOR A BICYCLE HANDLEBAR IN COMBINATION WITH A HEADLAMP**
STÜTZORGAN MIT SCHEINWERFER FÜR LENKER ENES FAHRRADES
ELEMENT DE SUPPORT POUR GUIDON DE BICYCLETTE, ASSOCIE A UN PHARE

(30) Priority: 01.02.2000 NL 1014252
(43) Date of publication of application: 30.10.2002
(73) Proprietor: Spanninga Metaal B.V., 8501 MK Joure (NL)
(72) Inventor: WYBENGA, Michiel, NL-8872 NH Midlum (NL); DE JONG, Piet, NL-8442 LK Heerenveen (NL); VELLINGA, Jacob, NL-8502 AL Joure (NL)
(74) Representative: Dohmen, Johannes Maria Gerardus
(86) International application number: PCT/NL2000/000962
(87) International publication number: WO 2001/056870

(56) References cited:
- WO-A-94/04408
- FR-A- 1 384 017
- US-A- 4 477 865

## Description

The invention relates to a supporting member for a bicycle handlebar in combination with a headlamp for a bicycle, wherein a housing of the headlamp is connected to said supporting member as shown in FR-A 1.384.017.

The object of the invention is to provide a combination of a supporting member for a bicycle handlebar and a headlamp, wherein the headlamp can be combined with the supporting member in a simple and efficient manner without including objectionable parts or parts that make the combination look unattractive.

According to the invention this can be achieved in that the housing of the headlamp includes a connecting part extending around said supporting member, whilst a clamping strip is provided, by means of which the connecting part can be locked in position against the supporting member.

Preferably, the connecting part can be pivoted about said supporting member and be locked in several positions, so that an optimum adjustment of the headlamp can be effected at all times.

Undesirable movements of the headlamp with respect to the supporting member can be avoided in a simple manner thereby if the supporting member is provided with a projecting rib, which is positioned between two parts of the connecting part disposed on either side of said rib.

The invention will now be explained in more detail by means of a few possible embodiments of the construction according to the invention as shown in the accompanying figures.

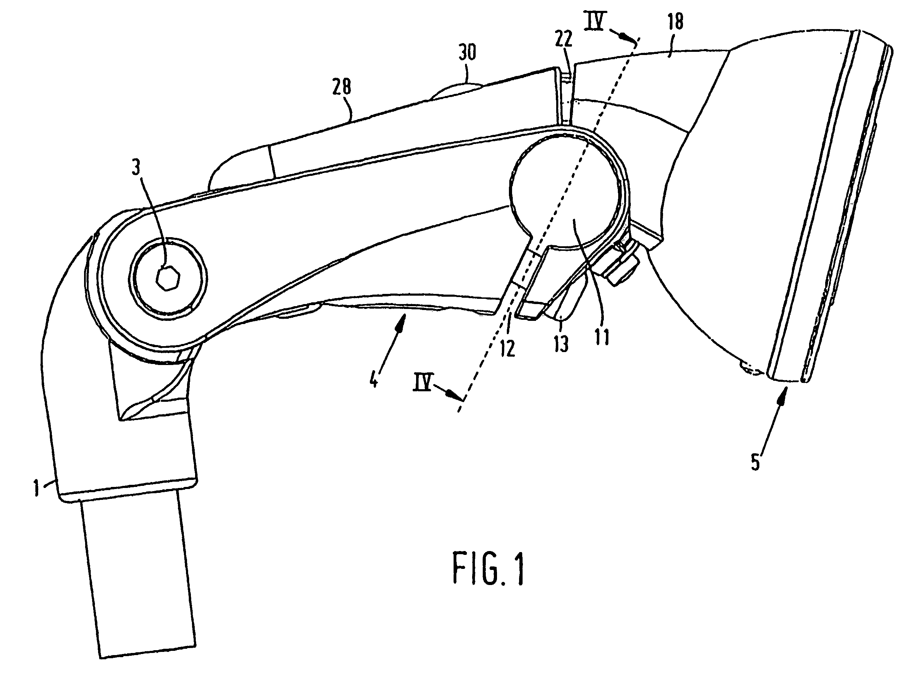

Figure 1 is a side view of a combination of a headlamp for a bicycle and a supporting member for supporting a bicycle handlebar.

Figure 2 is a central sectional view of the combination that is shown in Figure 1.

Figure 3 is a sectional view of a combination according to the invention, seen in a plane that is spaced from the sectional surface of Figure 2 by a short distance, whilst the relative positions of the various parts of the combination differ from the position that is shown in Figures 1 and 2.

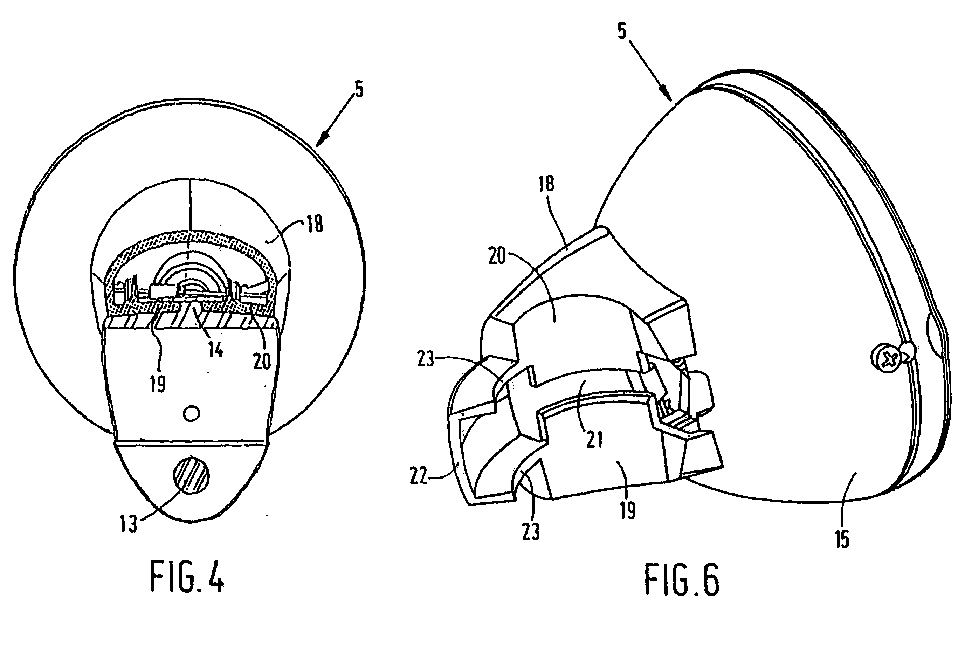

Figure 4 is a sectional view of Figure 1, seen along line IV-IV in Figure 1.

Figure 5 is a perspective view of a few parts of the combination, showing said parts in spaced-apart positions.

Figure 6 is a perspective view of the housing of the headlamp.

The combination that is shown in the figures comprises an elongate body 1 forming a handlebar pin holder, which is provided with an elongate hole 2. Handlebar pin holder 1 can be connected to the handlebar pin (not shown) of a bicycle, which handlebar pin will be pivotally accommodated in a usual manner in a frame tube of a bicycle.

Connected to the upper end of handlebar pin holder 1, by means of a horizontally extending pivot pin 3, is one end of a supporting member 4, which supporting member 4 supports a headlamp 5 at its end remote from handlebar pin holder 1.

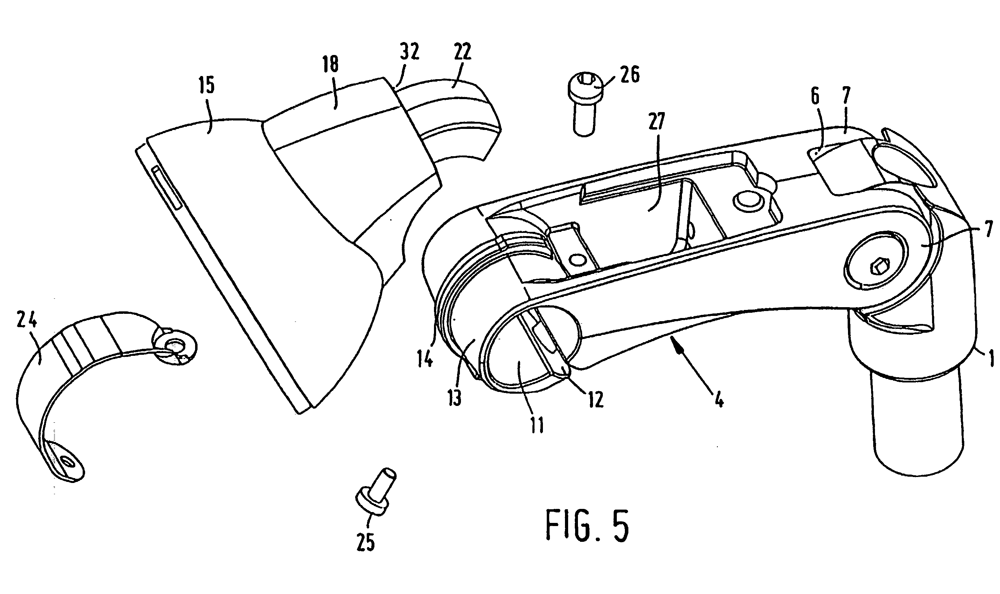

As is apparent in particular from Figure 5, the upper end of the handlebar pin holder is thereby positioned between two ears 7 that bound a recess 6 in supporting member 4.

The upper end of the handlebar pin holder is provided with teeth or knurls 8 along part of its circumference, which teeth or knurls can mate with corresponding teeth present on one end of a clamping block 9 positioned in recess 6, which clamping block has been fitted in recess 6 by means of a bolt 10.

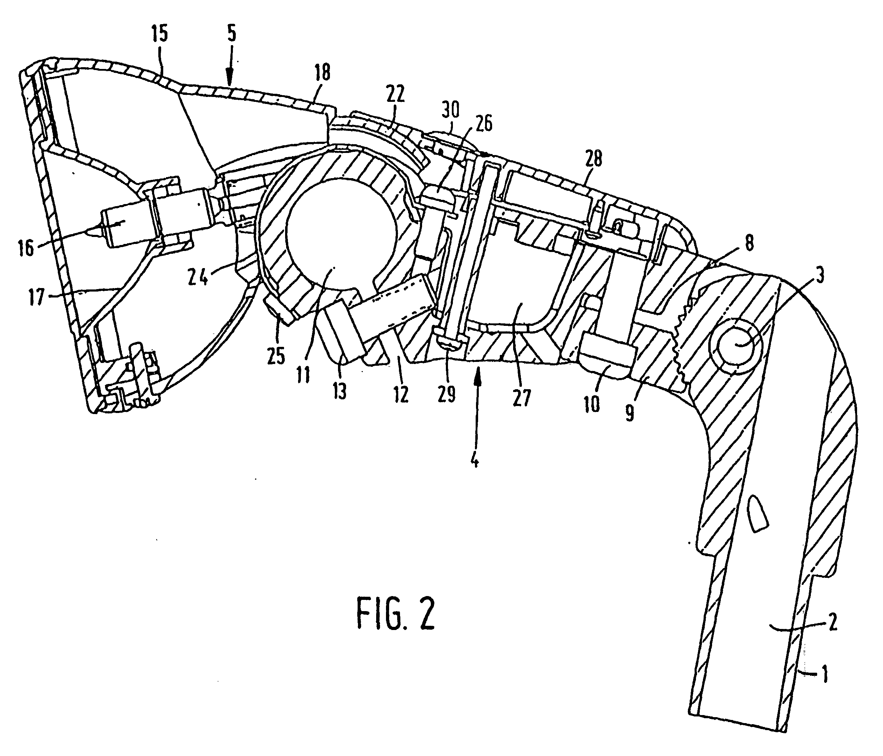

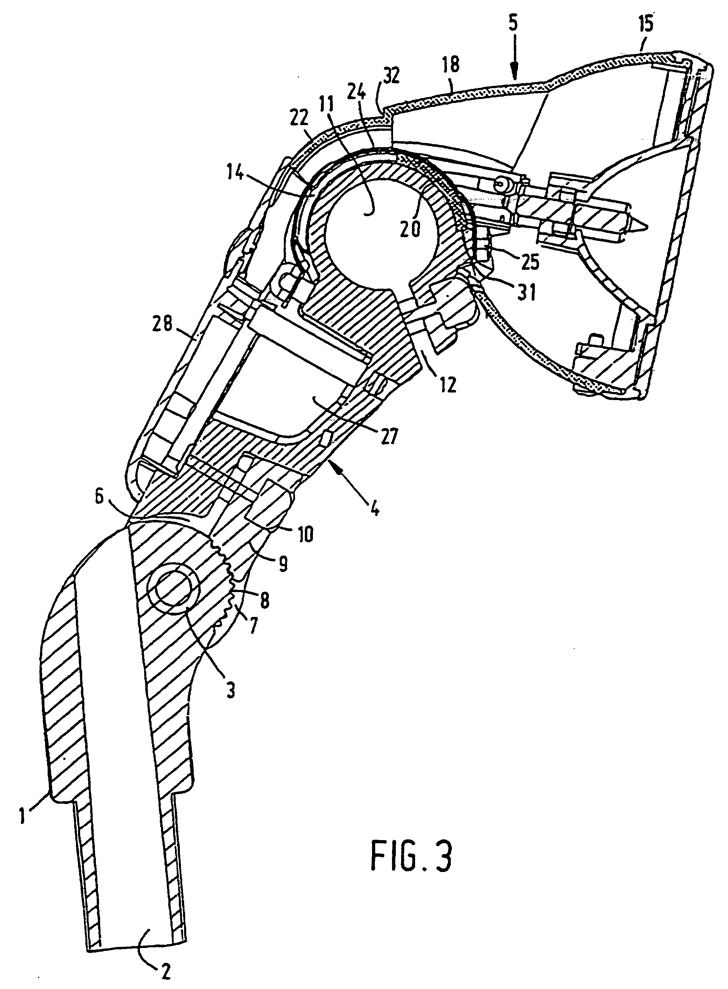

It will be apparent that if the teeth on clamping block 9 are not in engagement with teeth 8, the supporting member 4 can be pivoted about pivot pin 3 with respect to handlebar pin holder 1, for example between the position that is shown in Figure 2 and the position that is shown in Figure 3. When a desired position is reached, the supporting member 4 can be locked against rotation about pivot pin 3 with respect to the handl ebar pi n hol der by clamping the toothed end of clamping block 9 against the toothed part 8 of the handlebar pin holder by means of bolt 10.

A circular hole 11 is present in the end of the supporting member remote from the handlebar pin holder, to which hole 11 a slot 12 formed in said supporting member connects, which slot 12 is open at its end remote from hole 11.

A bolt 13 is positioned in holes that are present in the parts of the supporting member that bound slot 12, and the width of said slot can be slightly reduced by tightening bolt 13. Thus a handlebar (not shown) disposed in opening 11 can be locked in a desired position with respect to supporting member 4.

The end of the supporting member in which hole 11 is present includes a curved outer surface 13, the centre of curvature of which coincides at least substantially with the centre of hole 11. Said curved surface 13 is divided in two by a rib 14 that projects above curved surface 13 (Figure 5).

Headlamp 5 includes a housing 15, in which a lamp 16 and a reflector 17 are accommodated in a usual manner.

As appears in particular from Figures 5 and 6, housing 15 includes a connecting part 18 that is integral therewith, which connecting part includes a boundary surface consisting of two parts 19 and 20, wherein a gap 21 is formed in the housing between said two parts 19 and 20.

The curvature of boundary surfaces 19 and 20 is adapted to the curvature of the curved portion 13 of supporting member 4.

Connecting part 18 furthermore includes an extension 22 of U-shaped section. The free edges 23 of the legs of said U-shaped extension exhibit the same curvature as the curved surface 13 of the supporting member, and they extend in line with surfaces 19 and 20.

When headlamp 5 is connected to the supporting member, the surfaces 19 and 20 and the boundary edges 23 rest on the boundary surface 13 of supporting member 4, whilst rib 14 is positioned in gap 21. It will be understood that headlamp 5 can pivot with respect to supporting member 4 about a pivot axis that substantially coincides with the central axis of hole 11.

In order to make it possible to fix headlamp 5 in a desired position with respect to supporting member 4, a clamping strip 24 is used. One end of said clamping strip is fixed, by means of a bolt 25, to supporting member 4 near one end of curved surface 13. Clamping strip 24 furthermore extends over the parts 19 and 20 disposed on either side of groove 21, and between the legs of U-shaped extension 22. The other end is connected to supporting member 4 by means of a bolt 26.

Clamping strip 24 is thus accommodated and guarded within connecting part 18 and extension 22 along the larger part of its length.

The construction is furthermore such that the height of rib 14 is slightly less than the thickness of wall parts 19 and 20, so that the part of the clamping strip 24 that extends over said wall parts will rest on said wall parts 19 and 20. The part of the clamping strip 24 that projects outside said wall parts will be supported by rib 14 near its centre.

The clamping strip can be pulled tightly against the outer circumference of wall parts 19 and 20 so as to secure the headlamp 5 in a desired position with respect to supporting member 4. If desired, the clamping force may be adjusted in such a manner that it still remains possible to pivot the lamp by hand.

A chamber 27 is furthermore recessed in the supporting member 4, between the two ends of said supporting member, which chamber can be closed by means of a cover 28 present on the supporting member, which cover is fixed to the supporting member by means of a bolt 29.

Chamber 27 can for example be utilized for fitting electronics therein, by means of which electronics the lighting system of the bicycle is automatically activated when the bicycle is ridden in the dark.

The end of the cover 28 that faces towards the headlamp 5 is open, in such a manner that the end of extension 22 can be accommodated under said end of cover 28, with said end being capable of passing under cover 28 while pivoting.

Adjusting screw 26 is thereby accessible via an opening formed in said cover, which opening can be closed by means of an easily removable cap 30.

The pivoting movement of the cover in one direction is limited by the ends of the wall parts 19 and 20 coming into contact with a shoulder 31 formed on the supporting member, which shoulder is disposed near the bolt 25 by means of which one end of the clamping strip is fixed in position. The pivoting movement of the headlamp 5 in opposite direction is limited by a shoulder 32 formed in the housing of the headlamp, which shoulder will come into contact with the end of cover 28.

## Claims

1. A supporting member (4) for a bicycle handlebar in combination with a headlamp (5) for a bicycle, wherein a housing (15) of the headlamp (5) is connected to said supporting member (4), **characterized in that** the housing (15) of the headlamp (5) includes a connecting part (18) extending around said supporting member (4), whilst a clamping strip (24) is provided, by means of which the connecting part (18) can be clamped against the supporting member (4).

2. A supporting member (4) according to claim 1, **characterized in that** the headlamp (5) can be pivoted about said supporting member (4) together with the connecting part (18), and be locked in several positions by means of said clamping strip (24).

3. A supporting member (4) according to claim 1 or 2, **characterized in that** the supporting member (4) is provided with a projecting rib (14), which is positioned between two parts (19, 20) of the connecting part disposed on either side of said rib (14), around which the clamping strip (24) extends.

4. A supporting member (4) according to any one of the preceding claims, **characterized in that** said connecting part (18) forms a hollow space, in which the clamping strip (24) extends along part of its length.

5. A supporting member (4) according to any one of the preceding claims, **characterized in that** said connecting part (18) includes an extension (22) of U-shaped section, which extends over said clamping strip (24).

6. A supporting member (4) according to any one of the preceding claims, **characterized in that** said connecting part (18) extends around part of said supporting member (4), in which an opening (11) is formed for attaching a bicycle handlebar to said supporting member (4).

7. A supporting member (4) according to any one of the preceding claims, **characterized in that** a chamber (27) is recessed in said supporting member (4), which chamber (27) is closed by means of a cover (28) which is detachably connected to said supporting member (4).

8. A supporting member (4) according to claim 7, **characterized in that** said cover (28) includes an opening (30), via which access can be gained to a tensioning bolt (26) for said clamping strip (24).

9. A supporting member (4) according to claim 7 or 8, **characterized in that** an extension (22) of said connecting part (18) extends as far as under said cover (28).

10. A supporting member (4) according to any one of the preceding claims, **characterized in that** said supporting member (4) is pivotally connected, being adjustable in several positions, to a handlebar pin holder (1) at its end remote from said headlamp (5).

11. A supporting member (4) according to any one of the preceding claims, **characterized in that** electronics for turning the lamp on and off are fitted in a chamber (27) formed in said supporting member.

## Patentansprüche

1. Stützteil (4) für einen Fahrradlenker in Kombination mit einem Scheinwerfer (5), worin ein Gehäuse (15) des Scheinwerfers mit dem Stützteil (4) verbunden ist, **dadurch gekennzeichnet, dass** das Gehäuse (15) des Scheinwerfers (4) ein Verbindungsteil (18) umfasst, das sich um das Stützteil (4) erstreckt, während ein Befestigungsstreifen (clamping strip) (24) vorgesehen ist, durch den das Verbindungsteil (18) am Stützteil (4) befestigt werden kann.

2. Stützteil (4) nach Anspruch 1, **dadurch gekennzeichnet, dass** der Scheinwerfer (5) um das Stützteil (4) zusammen mit dem Verbindungsteil (18) gedreht und in mehreren Stellungen mittels des Befestigungsstreifens (24) arretiert werden kann.

3. Stützteil (4) nach Anspruch 1 oder 2, **dadurch gekennzeichnet, dass** am Stützteil (4) eine überstehende Rippe (14) vorgesehen ist, die zwischen zwei Teilen (19,20) des Verbindungsteils (18), die an je einer Seite der Rippe (14) angeordnet sind, angebracht ist, um die sich der Befestigungsstreifen (24) erstreckt.

4. Stützteil (4) nach einem der vorhergehenden Ansprüche, **dadurch gekennzeichnet, dass** das Verbindungsteil (18) einen Hohlraum ausbildet, in dem sich der Befestigungsstreifen (24) entlang eines Teils seiner Länge erstreckt.

5. Stützteil (4) nach einem der vorhergehenden Ansprüche, **dadurch gekennzeichnet, dass** das Verbindungsteil (18) eine Erweiterung (22) mit U-förmigem Profil umfasst, die sich über den Befestigungsstreifen (24) erstreckt.

6. Stützteil (4) nach einem der vorhergehenden Ansprüche, **dadurch gekennzeichnet, dass** sich das Verbindungsteil (18) um einen Teil des Stützteils (4) erstreckt, in dem eine Öffnung (11) zum Anbringen eines Fahrradlenkers an dem Stützteil ausgebildet ist.

7. Stützteil (4) nach einem der vorhergehenden Ansprüche, **dadurch gekennzeichnet, dass** eine Kammer (27) im Stützteil (4) ausgespart ist, die mittels einer Abdeckung (28) verschlossen wird, welche lösbar mit dem Stützteil (4) verbunden ist.

8. Stützteil (4) nach Anspruch 7, **dadurch gekennzeichnet, dass** die Abdeckung (28) eine Öffnung (30) umfasst, durch die Zugang auf einen Spannungsbolzen (26) für den Befestigungsstreifen (24) erhalten werden kann.

9. Stützteil (4) nach Anspruch 7 oder 8, **dadurch gekennzeichnet, dass** sich eine Erweiterung (22) des Verbindungsteils (18) bis unter die Abdeckung (28) erstreckt.

10. Stützteil (4) nach einem der vorhergehenden Ansprüche, **dadurch gekennzeichnet, dass** das Stützteil (4) an dem vom Scheinwerfer (5) entfernten Ende drehbar und in mehreren Stellungen einstellbar mit einem Lenker-Bolzenhalter (1) verbunden ist.

11. Stützteil (4) nach einem der vorhergehenden Ansprüche, **dadurch gekennzeichnet, dass** eine Elektronik zum An- und Abschalten der Lampe in eine Kammer (27), die in dem Stützteil ausgebildet ist, eingepasst ist.

## Revendications

1. Elément de support (4) pour un guidon de bicyclette associé à un phare (5) pour une bicyclette, dans lequel un logement (15) du phare (5) est relié audit élément de support (4), **caractérisé en ce que** le logement (15) du phare (5) comprend une pièce de liaison (18) entourant ledit élément de support (4), tandis qu'une bande de serrage (24) est fournie, au moyen de laquelle la pièce de liaison (18) peut être serrée contre l'élément de support (4).

2. Elément de support (4) selon la revendication 1, **caractérisé en ce que** le phare (5) peut pivoter autour dudit élément de support (4) conjointement avec la pièce de liaison (18), et peut être bloqué dans plusieurs positions au moyen de ladite bande de serrage (24).

3. Elément de support (4) selon la revendication 1 ou 2, **caractérisé en ce que** l'élément de support (4) est muni d'une nervure saillante (14) qui est positionnée entre deux parties (19, 20) de la pièce de liaison disposées de part et d'autre de ladite nervure (14), autour de laquelle s'étend la bande de serrage (24).

4. Elément de support (4) selon l'une quelconque des revendications précédentes, **caractérisé en ce que** ladite pièce de liaison (18) forme un espace creux, dans lequel la bande de serrage (24) s'étend sur une partie de sa longueur.

5. Elément de support (4) selon l'une quelconque des revendications précédentes, **caractérisé en ce que** ladite pièce de liaison (18) comprend une extension (22) profilée en U, qui s'étend sur ladite bande de serrage (24).

6. Elément de support (4) selon l'une quelconque des revendications précédentes, **caractérisé en ce que** ladite pièce de liaison (18) entoure une partie dudit élément de support (4), dans lequel une ouverture (11) est formée pour fixer un guidon de bicyclette sur ledit élément de support (4).

7. Elément de support (4) selon l'une quelconque des revendications précédentes, **caractérisé en ce qu'**un évidement (27) est pratiqué dans ledit élément de support (4), lequel évidement (27) est fermé au moyen d'un capot (28) qui est relié audit élément de support (4) de manière à pouvoir être démonté.

8. Elément de support (4) selon la revendication 7, **caractérisé en ce que** ledit capot (28) comprend une ouverture (30), qui permet d'accéder à une vis de tension (26) pour ladite bande de serrage (24).

9. Elément de support (4) selon la revendication 7 ou 8, **caractérisé en ce qu'**une extension (22) de ladite pièce de liaison (18) s'étend jusqu'en dessous dudit capot (28).

10. Elément de support (4) selon l'une quelconque des revendications précédentes, **caractérisé en ce que** ledit élément de support (4) est relié de manière à pouvoir pivoter, étant ainsi réglable dans plusieurs positions, à un élément de fixation par boulon d'un guidon (1) au niveau de son extrémité éloignée dudit phare (5).

11. Elément de support (4) selon l'une quelconque des revendications précédentes, **caractérisé en ce qu'**un équipement électronique permettant d'allumer et d'éteindre le phare est placé dans un évidement (27) formé dans ledit élément de support.
